# DEMANDE DE BREVET EUROPEEN

(11) **EP 1 444 941 A1**
(43) Date de publication de la demande: **11.08.2004**
(21) Numéro de dépôt: 03405058.3
(22) Date de dépôt: 05.02.2003
(51) Int. Cl.: A47J 37/06

(54) **Gril à raclettes**

(71) Demandeur: Traitements Thermiques S.A., 3960 Sierre (CH)
(72) Inventeur: Burkard, Pascal, 3961 Sierre (CH)
(74) Mandataire: Charbonnier, Georges R.

(57) **Abrégé**

Le gril à raclettes comprend un socle (10), un corps de chauffe électrique (12) et un porte-fromage (13) monté sur une colonne filetée (18) elle-même pivotée en (14).
Le porte-fromage (13) est constitué par un berceaa (22) articulé en ( 25).
Le gril s'utilise comme suit :
La face à racler R de la pièce de fromage est amenée en regard du corps de chauffe (12), puis, lorsque la couche à racler est fondue, le porte-fromage (13) est incliné pour permettre de racler cette couche dans une assiette,

## Description

On connaît de nombreux grils à raclettes permettant de préparer des raclettes selon la méthode traditionnelle, c'est-à-dire en plaçant, dans un premier temps, une face d'une coupe de fromage devant une source de chaleur, puis, dans un second temps, en raclant la couche de fromage fondu.

Ces grils, qu'ils soient pour les restaurants ou pour des raclettes familiales ou analogues, comprennent généralement un socle, un corps de chauffe électrique et un dispositif porte-fromage agencé de manière que la face à faire fondre puisse occuper une première position en regard du corps de chauffe, puis une seconde position, à l'écart de ce dernier, pour permettre de racler le fromage fondu dans une assiette, ces deux opérations étant répétées pour chaque convive.

Les grils conçus pour les restaurants sont prévus pour des demi-meules de fromage, mais sont trop volumineux pour être utilisés dans un cadre restreint, notamment parce qu'ils sont dimensionnés en fonction des meules de fromage standards dont le diamètre est relativement grand.

Il existe aussi des grils conçus pour utiliser des quarts de meule de fromage, mais ils présentent de nombreux inconvénients, notamment celui de ne permettre le chauffage du fromage que pour des positions inclinées de la face à racler, d'où il résulte que le fromage coule avant d'être suffisamment fondu.

L'objet de la présente invention est un gril destiné principalement à être utilisé pour un petit nombre de personnes avec des quarts de meule ou éventuellement avec des morceaux de fromage coupés en carré ou en rectangle. Il n'occupe qu'un espace réduit et élimine tous les inconvénients susmentionnés. Il est défini par la revendication 1 du présent brevet.

Le dessin ci-annexé représente schématiquement et à titre d'exemple non limitatif une forme d'exécution du gril selon la présente invention.

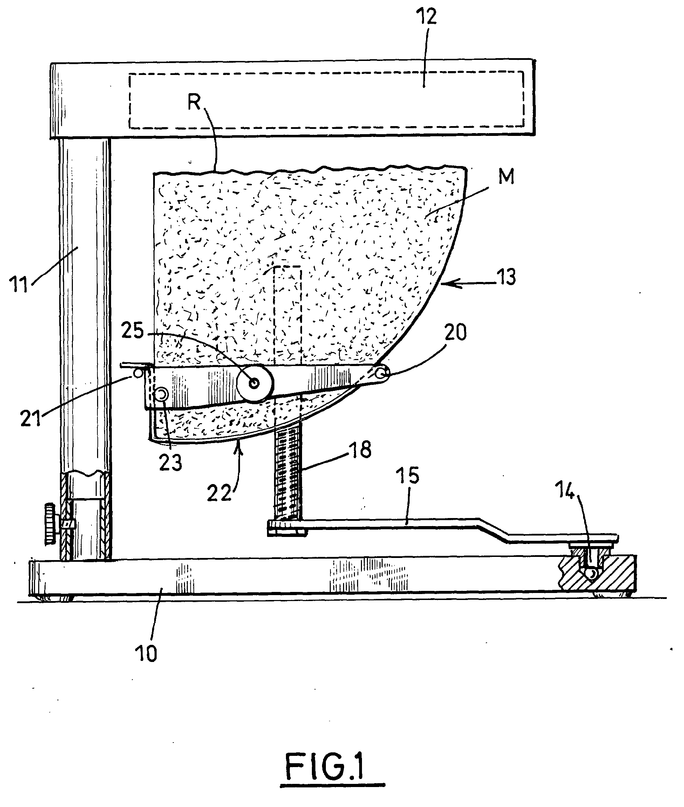

La figure 1 en est une vue en élévation latérale.

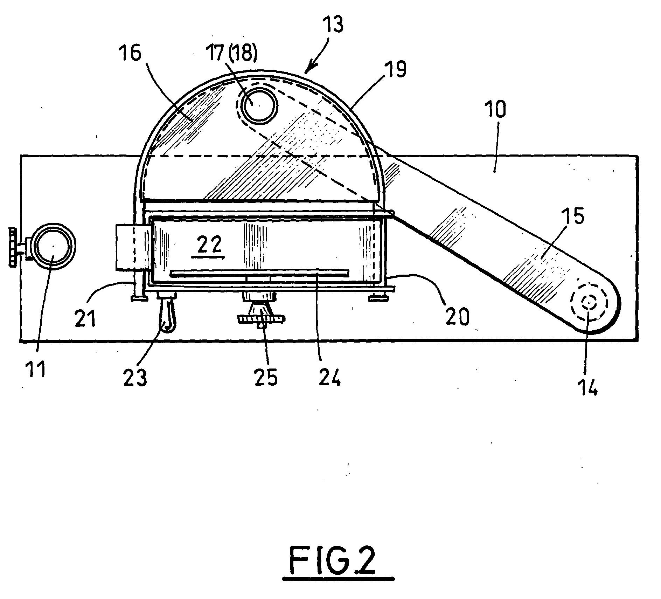

La figure 2 en est une vue en plan.

Le gril représenté au dessin est constitué par un socle 10, de forme rectangulaire, par un tube télescopique vertical 11 fixé à une extrémité du socle 10, sur lequel peut coulisser le support d'un corps de chauffe électrique horizontal 12, et par un dispositif porte-fromage 13 monté rotativement à l'autre extrémité du socle 10 sur un pivot 14 par l'intermédiaire d'un bras 15.

Le dispositif porte-fromage 13 comprend une plaque métallique demi-ronde 16 présentant une ouverture 17 dans laquelle est chassé un écrou 17, une colonne filetée 18 engagée dans cet écrou de manière qu'en faisant tourner la plaque 16 autour de cette colonne, on la fait monter ou descendre selon le sens de rotation d'un intervalle égal au pas du filetage de l'écrou 17, et par une tige 19, de section ronde, en forme de U, soudée par sa partie circulaire sous la partie arrondie de la plaque 16, de manière que ses branches 20 et 21 s'étendent perpendiculairement au bord rectiligne de cette plaque.

Le dispositif porte-fromage comprend encore un berceau 22, formé par l'assemblage d'éléments en tôle découpés, pliés et soudés, dans lequel est engagé un quart de pièce de fromage.

Ce berceau 22 est monté rotativement sur la branche 20 de la plaque 16. Ses déplacements sont limités par une butée constituée par la branche 21 et la seconde par une butée non représentée. Une poignée isolante 23 permet de manoeuvrer facilement ce berceau 22.

Le quart de pièce repose sur le fond du berceau 22 et est maintenu en place par serrage latéral d'une plaque 24 soumise à l'action d'une molette 25. Il est positionné de manière que sa face à racler R soit horizontale et parallèle au corps de chauffe 12 lorsque le berceau 22 prend appui sur la branche 20.

Dans la seconde position du berceau 22, la face à racler du fromage est inclinée.

Le gril décrit s'utilise comme suit:
1) Le "racleur", après avoir mis en place un quart de pièce à racler dans le berceau 22, amène la face à racler R en regard du corps de chauffe 12, par rotation autour du pivot 14. La chaleur dégagée fait fondre la couche superficielle de cette face.
2) Lorsque la couche de fromage fondu a une épaisseur suffisante, il éloigne le porte-fromage 13 du corps de chauffe 12 par rotation autour du pivot 14.
3) Il fait ensuite basculer le berceau 22 et le quart de pièce jusqu'à la position déterminée par la seconde butée.
4) Dans cette position inclinée du quart de pièce, il racle la couche de fromage fondu dans l'assiette d'un convive.

Ceci fait, il ramène le porte-fromage 13 dans sa position initiale et répète successivement ces opérations pour chacun des autres convives.

Pour que le fromage fonde régulièrement, le "racleur" a la possibilité de rapprocher la surface à racler du corps de chauffe 12 en faisant monter le porte-fromage 13 par rotation autour de la tige filetée 19.

L'invention n'est évidemment pas limitée à ce qui est représenté au dessin et décrit ci-dessus.

En particulier les moyens mis en oeuvre pour faire occuper à la face à racler R ses positions successives pourraient être différents.

## Revendications

1. Gril à raclettes comprenant un socle (10), un corps de chauffe électrique horizontal (12) et un porte-fromage (13), **caractérisé par le fait qu'**il comprend des moyens permettant d'amener la face à racler R du fromage en position horizontale en regard dudit corps de chauffe (12), d'éloigner cette face R de ce dernier, de faire pivoter le fromage autour d'un axe horizontal (20) de manière à incliner cette face R pour racler le fromage fondu.

2. Gril selon la revendication 1, **caractérisé par le fait que** ledit porte-fromage (13) est monté sur un pivot (14) par l'intermédiaire d'un bras (15).

3. Gril selon la revendication 2, **caractérisé par le fait que** ledit bras (15) supporte le porte-fromage (13) par l'intermédiaire d'une colonne filetée (18).

4. Gril selon la revendication 2, **caractérisé par le fait que** ledit pivot (14) est situé à une extrémité dudit socle (10).

5. Gril selon la revendication 3, **caractérisé par le fait que** ledit porte-fromage (13) est constitué par une partie (16) comprenant un écrou dans lequel est engage ladite colonne filetée (18) et par un berceau (22) dans lequel le fromage est maintenu serré et qui est susceptible de pivoter autour d'un axe horizontal (20).

6. Gril selon la revendication 5, **caractérisé par le fait que** ladite partie (16) est constituée par une plaque métallique.

7. Gril selon la revendication 6, **caractérisé par le fait qu'**il comprend deux butées fixant respectivement les positions horizontale et inclinée de la face R de fromage à racler.

8. Gril selon la revendication 5, **caractérisé par le fait que** ledit berceau (22) est agencé pour l'utilisation de 1/4 pièce de fromage.

9. Gril selon la revendication 5, **caractérisé par le fait que** ledit berceau (22) est agencé de manière à permettre l'utilisation de fromage de forme carrée ou rectangulaire.
